# EUROPÄISCHE PATENTSCHRIFT

(11) **EP 3 445 692 B1**
(45) Veröffentlichungstag und Bekanntmachung des Hinweises auf die Patenterteilung: **21.09.2022**
(21) Anmeldenummer: 17715061.2
(22) Anmeldetag: 21.03.2017
(51) Int. Cl.: B65G 47/08, B65B 21/06

(54) **VERFAHREN UND VORRICHTUNG ZUM UMGANG MIT IN MINDESTENS ZWEI PARALLELEN REIHEN BEWEGTEN STÜCKGÜTERN**
METHOD AND DEVICE FOR HANDLING PIECE GOODS MOVED IN AT LEAST TWO PARALLEL ROWS
PROCÉDÉ ET DISPOSITIF PERMETTANT LA MANUTENTION DE MARCHANDISES DE DÉTAIL DÉPLACÉES SUR AU MOINS DEUX RANGÉES PARALLÈLES

(30) Priorität: 20.04.2016 DE 102016206639
(43) Veröffentlichungstag der Anmeldung: 27.02.2019
(73) Patentinhaber: Krones Aktiengesellschaft, 93073 Neutraubling (DE)
(72) Erfinder: KOLLMUSS, Manuel, 93073 Neutraubling (DE); KIRZINGER, Johannes, 93073 Neutraubling (DE)
(74) Vertreter: Benninger, Johannes
(86) Internationale Anmeldenummer: PCT/EP2017/056654
(87) Internationale Veröffentlichungsnummer: WO 2017/182217

(56) Entgegenhaltungen:
- EP-A1- 2 662 293
- WO-A1-2010/106529
- WO-A1-2011/127367
- DE-A1- 4 439 728
- DE-A1- 10 219 129
- DE-A1-102013 113 754
- DE-A1-102013 204 095
- DE-U1- 20 108 401
- JP-A- S62 285 817
- US-A1- 2010 147 650

## Beschreibung

Die vorliegende Erfindung betrifft ein Verfahren und eine Vorrichtung zum Umgang mit in mindestens zwei parallelen Reihen bewegten Stückgütern gemäß den Merkmalen der der unabhängigen Ansprüche 1 bzw. 8.

Bei bekannten Verfahren zur Verpackung und/oder Palettierung von Stückgütern wie Paketen, Gebinden o. dgl. werden diese zunächst auf in Linien fördernden Transporteinrichtungen befördert und in geeigneter Weise verschoben, ausgerichtet und/oder zusammengestellt, um gewünschte Lagenbilder zu erzeugen, die anschließend mehrfach übereinander gestapelt werden können, bspw. auf hierfür vorbereitete Paletten. Diese Behandlungsschritte können insbesondere bei Anlagen zur Behandlung von Behältern für Getränke sinnvoll eingesetzt werden. Bei den fraglichen Stückgütern kann es sich bspw. um Pakete, um Kästen, Kartons, Gebinde oder Cluster handeln. Damit die erwähnten Paletten transportsicher sind, müssen die zusammengestellten Lagenbilder, die auch als zusammengestellte Takte bezeichnet werden, bestimmte Anforderungen erfüllen. Herkömmlicherweise sind zur Ausbildung solcher Takte vorbereitende Maßnahmen notwendig, die etwa darin bestehen, die zunächst regelmäßig oder schrittweise auf einem sog. Zuteilungsband beförderten Stückgüter auf einem zwischengeschalteten Transportband zu gruppieren bzw. zu sammeln, um sie von dort gesammelt und/oder gruppiert an ein Lagenbildungsband oder einen Lagenbildungstisch zu übergeben.

Aus dem Stand der Technik ist es bekannt, Stückgüter vereinzelt von einem Zuteilband auf ein Transportband zu übergeben, womit gemeint ist, dass auf dem Zuteilband jeweils einzelne Stückgüter an das Transportband übergeben werden. Diese Übergabe kann dadurch erfolgen, dass jedes einzelne Stückgut durch einen Geschwindigkeitsunterschied zwischen Zuteilband und Transportband einzeln auf das Transportband übergeben wird, wobei eine Steuerung durch optische Sensoren wie etwa Lichtschranken vorhanden sein kann. Ebenso denkbar ist es, die Stückgüter vereinzelt von dem Transportband durch schrittweises Fahren des Lagenbildungsbandes zu übergeben. Um auf eine solche Weise jeweils einzelne Stückgüter vom Transportband auf das Lagenbildungsband zu übergeben, kann das Lagenbildungsband in synchronisierten Schritten mit dem Transportband genau um eine Länge eines Stückgutes in Transportrichtung verfahren werden. Auf dem Transportband können diese Takte oder Gruppierungen bzw. Teile der gruppierten Stückgüter je nach gewünschter Lagenbildung auch gedreht werden, um dann an das Lagenbildungsband übergeben zu werden.

Für die Ausgestaltung von Gruppiertischen, die dem Zusammenführen von Stückgütern wie z. B. Kartons, Schrumpfpacks, Trays und Kunststoffkisten dienen, kennt der Stand der Technik unterschiedliche Ausführungsvarianten. So können etwa Stückgüter zusammengeführt werden, indem sie in eine zweidimensionale Formation (Blockbildung, z. B. Palettenschicht) gebracht werden. Hierzu kann bspw. eine Rollenbahn aus einer Gasse oder aus mehreren Gassen linear versorgt werden. Die Stückgüter können je nach Bedarf vor oder auf dem Rollenförderer gedreht und auf dem Rollenförderer mechanisch durch Stoppstellen in der erforderlichen Position angeordnet werden. Die solchermaßen positionierten Stückgüter können anschließend orthogonal zur Transportrichtung vom Rollenförderer abgeschoben werden. Der Zulauf, die Anordnung und das Abschieben der Stückgüter können hierbei als ein Zyklus betrachtet werden. Zur Zusammenstellung einer Schicht wird mindestens ein Zyklus, normalerweise jedoch werden mehrere Zyklen benötigt. Die teilweise diskontinuierliche Förderung mit ihren relativ abrupten Geschwindigkeits- bzw. Richtungsänderungen verursacht entsprechend hohe mechanische Belastungen der Stückgüter, was einer produktschonenden Verarbeitung der Stückgüter abträglich sein kann.

Das Dokument EP 1 456 101 A2 offenbart eine Vorrichtung zur Reihenbildung von Packgütern für Gebindepalletierer. Der Gebindepalletierer umfasst mindestens eine Lagenstation und mindestens eine Palletierstation. Die Reihenbildungsvorrichtung umfasst mindestens eine Positionierstation, auf der die Packgüter während des Transports in mindestens einer Reihe mit gewünschten Abständen angeordnet werden. Die Positionierstation ist an einen der Lagenstation zugeordneten Bereitstellungsförderer angeschlossen. Stromaufwärts der Positionierstation ist mindestens ein Stauförderer angeordnet, wobei die Positionierstation mehrere in Transportrichtung hintereinander angeordnete Förderabschnitte mit Steuer- und regelbaren Antrieben besitzt. Mit den Steuer- und regelbaren Antrieben ist es möglich, eine gewünschte Abstandsbildung der Packgüter zu erzielen. Die Reihenbildungsvorrichtung besitzt mindestens eine Überwachungseinrichtung zur Ermittlung und Überwachung der Abstandsbildung der Packgüter. Der Aufbau dieser bekannten Reihenbildungsvorrichtung ist relativ aufwendig und kompliziert, zumal er eine Vielzahl von Bändern erfordert, die für eine Abstandsbildung und/oder Drehung der Packgüter benötigt werden.

Die Gebrauchsmusterschrift DE 201 08 401 U1 beschreibt einen Umsetzer für eine Flaschenbehandlungsanlage. Dieser kann in zwei Richtungen arbeiten. Beispielsweise kann der Umsetzer derart eingesetzt werden, dass er Flaschen von einer Flaschenreihe abgreift und diese auf einem oder mehreren Trays absetzt.

Die Offenlegungsschrift DE 10 2013 204095 A1 offenbart eine Vorrichtung nach dem Oberbegriff des Anspruchs 1, zum Ausrichten und/oder Gruppieren von Gebinden. Die Gebinde werden dabei in regelmäßiger Reihe und beabstandet zueinander zugeführt. Alternativ können die Gebinde ungeordnet zugeführt werden, wobei eine sensorische Erfassung der Gebinde erfolgt, deren Daten einer Steuereinrichtung zugeführt und zur Ansteuerung der Manipulationseinrichtung verwendet werden. Der Manipulationseinrichtung erfasst und handhabt jeweils einzelne Gebinde.

Die Offenlegungsschrift US 2010/147650 A1 beschreibt eine Vorrichtung zum Transportieren von Gebinden mit einer ersten Transporteinrichtung und einer Dreheinrichtung. Zur Bearbeitung von in zwei parallelen Reihen zugeführten Gebinden ist die Verwendung von zwei Greifeinheiten vorgesehen, wobei jede der Greifeinheiten jeweils die Gebinde einer zugeordneten Reihe abarbeitet,

Das Dokument EP 2 662 293 A1 offenbart ein System zum Bilden einer Schicht von zu palettierenden Paketen. Dies erfolgt vermittels eines Handhabungselements, welches senkrecht zur Transportrichtung beweglich und drehbeweglich ausgebildet ist und Greifbacken zum Erfassen der Pakete aufweist.

Die Offenlegungsschrift DE 102 19 129 A1 beschreibt ein Verfahren zum Drehen und wahlweisen Verteilen oder Zusammenführen von Packs, die in mindestens einer Zuteilbahn zugeführt und in mindestens einer zu der oder den Zuteilbahnen parallelen Auslaufbahn in einer um 90 Grad gedrehten Anordnung abgeführt werden, wobei jeweils mindestens zwei Packs erfasst und als Gruppe um 90° verdreht werden.

Das Dokument DE 10 2013 113754 A1 offenbart eine Förder- und Handhabungsvorrichtung für Artikel, die eine Horizontalfördereinrichtung zur Beförderung von Artikeln in einem Massenstrom oder in Gruppen und eine Einrichtung zur Gruppierung der Artikel oder Behälter aufweist, der eine Umreifungsstation zur Zusammenfassung der Artikelgruppen zu Umreifungsgebinden nachgeordnet ist. Der Umreifungsstation ist ein Stapelplatz zur Bildung von Palettenlagen mit jeweils mehreren nebeneinanderstehenden Umreifungsgebinden je Lage nachgeordnet.

Die Offenlegungsschrift WO 2011/127367 A1 beschreibt eine Vorrichtung mit einem Werkzeug und einer Schiene, mit der das Werkzeug gleitend in Eingriff steht. Das Werkzeug umfasst Dosierungsvorsprünge zum Eingriff in einen Artikel oder eine Gruppe von Artikeln sowie ein Stellglied, das zum Verschieben der Dosierungsvorsprünge in eine zweite Richtung betreibbar ist, wobei mindestens eine Komponente der zweiten Richtung quer zu der ersten Richtung ist.

Das Dokument JP S62 285817 A zeigt eine Fördervorrichtung für Artikel, wobei im Zuge des Transports zu nachfolgenden Handhabungsvorrichtungen Artikelgruppen gebildet werden.

Die Offenlegungsschrift WO 2010/106529 A1 offenbart einen Greifkopf mit einem um eine erste Drehachse drehbaren Trägerelement, an dem zwei oder mehr Greifer schwenkbar angeordnet sind. Die Greifer eines Greifkopfes erfassen hierbei gemäß Beschreibung jeweils Stückgutgruppen, die vorab von einer Reihe von endlos zulaufenden Stückgütern beabstandet wurden.

Das Dokument DE 44 39 728 A1 betrifft eine Vorrichtung zum Befördern und Gruppieren von über einen Zuführweg in einer Zuführrichtung mittels Fördereinheiten zugeführten Gegenständen mit zwei Reihen gegenüberliegender, korrespondierender und in einer Seite-an-Seite-Beziehung angeordneter Förderelementen, die während eines parallel zur Zuführrichtung verlaufenden Arbeitswegs die Gegenstände durch eine Zustellbewegung quer zur Zuführrichtung von beiden Seiten des Zuführwegs erfassen, befördern und gruppieren und durch eine Wegstellbewegung quer zur Zuführrichtung freigeben und einen parallel zum Arbeitsweg entgegen der Zuführrichtung verlaufenden Rückweg durchlaufen, wobei die Zustellbewegung bzw. Wegstellbewegung der Förderelemente durch steuerkurvengeführte und mit den Förderelementen verbundenen Steuernocken erfolgt.

Aus US 5 123 231 A ist eine Vorrichtung zur Zusammenstellung von Artikeln zu Gruppen und zu deren anschließenden Verpackung bekannt. Auf einem Zuführband werden die Artikel jeweils unter einem vordefinierten Abstand einem Sammelband zugeführt, auf dem die Gruppen aus einer immer gleichen Anzahl von Artikeln zusammengestellt werden. Die Gruppen werden mit einem nachfolgenden Band einer Verpackungseinrichtung zugeführt.

Das vorrangige Ziel der Erfindung besteht darin, eine exakte und positionsgenaue Verarbeitung und Handhabung von Stückgütern zu ermöglichen, die in mindestens zwei parallelen Reihen befördert bzw. transportiert werden. Die entsprechende Vorrichtung soll schneller betreibbar sein als die aus dem Stand der Technik bekannten Manipulationsvorrichtungen, und dies bei zumindest annähernd gleicher Zuverlässigkeit und annähernd gleicher Stellpräzision.

Diese Ziele der Erfindung werden mit den Gegenständen der unabhängigen Ansprüche, d.h. mit einem Verfahren nach Anspruch 8 und einer Vorrichtung nach Anspruch 1 zum Umgang mit in mindestens zwei parallelen Reihen hintereinander bewegten Stückgütern erreicht, welche die Merkmale der unabhängigen Patentansprüche umfassen. Merkmale vorteilhafter Weiterbildungen der Erfindung ergeben sich aus den jeweiligen abhängigen Ansprüchen.

Die Erfindung bezieht sich auf ein Verfahren und eine Vorrichtung bzw. Handhabungsvorrichtung zum Umgang mit in mindestens zwei parallelen Reihen hintereinander bewegten Stückgütern zur Ausbildung einer eine Mehrzahl an Stückgütern umfassenden palettierfähigen Lage oder Teillage. Wenn also im Zusammenhang der vorliegenden Beschreibung nur noch von einem Verfahren, einer Verfahrensvariante, dem erfindungsgemäßen Verfahren o. dgl. die Rede ist, so ist damit generell das genannte Verfahren zum Umgang mit in mindestens zwei parallelen Reihen hintereinander bewegten Stückgütern gemeint. Wenn zudem im Zusammenhang der vorliegenden Beschreibung nur noch von einer Vorrichtung, einer Handhabungsvorrichtung, einer Vorrichtungsvariante, der erfindungsgemäßen Vorrichtung o. dgl. die Rede ist, so ist damit generell die genannte Vorrichtung zum Umgang in mindestens zwei parallelen Reihen hintereinander bewegten Stückgütern gemeint. Wenn hier, in den Ausführungsbeispielen, in den Ansprüchen und/oder im Zusammenhang mit der gesamten Beschreibungsoffenbarung von einem Umgang mit Stückgütern die Rede ist, so umfasst dies die Handhabung, die Erfassung, die Positionierung, die Bewegung im Raum, die Drehung, Ausrichtung etc., insbesondere im Zusammenhang mit einem Manipulator und/oder beweglichen Teilen des Manipulators, der/die in einem Erfassungsraum bzw. Erfassungsbereich angeordnet ist/sind und sich dort innerhalb von definierbaren Grenzen bewegen können. Allerdings umfasst der Begriff des Umgangs gleichermaßen Positionierungs-, Förder- und/oder alle Arten von Handhabungsschritten, die im Zusammenhang mit Fördereinrichtungen, Horizontalfördereinrichtungen, Transportbändern etc. stattfinden können, die Teil der erfindungsgemäßen Vorrichtung sind und/oder mit dieser in Wirkverbindung und/oder in einer Transportverbindung stehen, seien dies in Transport- und/oder Förderrichtung nachgeordnete, vorgeordnete oder integrierte Teile der erfindungsgemäßen Vorrichtung.

Wenn von einer unveränderten oder neuen Ausrichtung die Rede ist, so ist damit im Zusammenhang mit der vorliegend beschriebenen Vorrichtung insbesondere die winkelige Ausrichtung der zuvor erfassten und vom Manipulator bewegten und/oder verschobenen und/oder gedrehten Stückgüter die Rede. Mit Erfassen ist im vorliegenden Zusammenhang meist das körperliche, formschlüssige und/oder kraftschlüssige und/oder klemmende Greifen eines Stückgutes oder gleichzeitig mehrerer Stückgüter sowie deren bzw. dessen Handhabung bis zur Erreichung der Zielposition und/oder Zielausrichtung gemeint.

Bei den Stückgütern kann es sich um in einer Reihe hintereinander bewegte Artikel, Packstücke, Behälterzusammenstellungen, Gebinde, Kartons o.ä. handeln. Beispielsweise kann vorgesehen sein, dass eine Mehrzahl von gleichen oder unterschiedlichen Artikeln durch eine Kartonumverpackung, durch eine Umreifung oder mehrere Umreifungen, durch eine Folienverpackung o. dgl. zu einem Gebinde bzw. Mischgebinde zusammengefasst sind. Weiterhin kann eine Mehrzahl von Getränkebehältern, die beispielsweise durch eine Schrumpfverpackung, durch ein Umreifungsband oder mehrere Umreifungsbänder zusammengehalten werden, jeweils ein Stückgut bilden. Die in Reihe hintereinander bewegten Stückgüter können dabei je nach Anforderung von nachfolgenden Handhabungsvorrichtungen gleich oder unterschiedlich ausgebildet sein.

Erfindungsgemäß ist vorgesehen, dass in mindestens einem Verfahrensschritt zur Ausbildung einer palettierfähigen Lage oder Teillage wenigstens zwei in parallelen Reihen nebeneinander transportierte Stückguter klemmend und/oder kraft- und/oder formschlüssig vom Manipulator erfasst, von den mindestens zwei parallelen Reihen räumlich abgetrennt und in eine definierte relative Zielposition und/oder -ausrichtung gegenüber den nachfolgenden Stückgütern der wenigstens zwei parallelen Reihen gebracht werden.

Die Vorrichtung, vermittels welcher das vorbeschriebene Verfahren vorzugsweise durchgeführt werden kann und die dem Umgang mit in mindestens zwei parallelen Reihen hintereinander bewegten Stückgütern dient, umfasst wenigstens eine erste Transporteinrichtung und mindestens einen Manipulator. Die wenigstens eine erste Transporteinrichtung dient der Zuführung der in mindestens zwei parallelen Reihen zugeführten Stückgüter zu einem Erfassungsbereich des mindestens einen Manipulators.

Der mindestens eine Manipulator ist typischer- /vorzugsweise zum klemmenden und/oder formschlüssigen und/oder kraftschlüssigen Erfassen und/oder Entgegennehmen mindestens eines Stückgutes von mindestens einer der zwei zuführenden parallelen Reihen innerhalb seines Erfassungsbereiches sowie zum Abtrennen und Überführen des mindestens einen Stückgutes in eine Zielposition innerhalb seines Erfassungsbereiches ausgebildet. Der Manipulator kann beispielsweise als Parallelkinematik- Roboter ausgebildet oder Teil eines solchen sein, insbesondere als Tripod oder Portalroboter, Mehrachsroboter etc. und weist gemäß einer Ausführungsform wenigstens zwei gegenüberliegend, insbesondere paarweise gegenüberliegend angeordnete Klemm- und/oder Greifelemente auf, die insbesondere jeweils paarweise miteinander zusammenwirken. Diese Definition der Klemm- und Greifelemente des Manipulators umfasst bspw. auch Doppelgreifer oder Mehrfachgreifer o. dgl., die mehrere Greifpaare aufweisen können, deren Greifpaare jedoch insbesondere paarweise zusammenwirken, um bspw. Stückgütern in mehreren parallelen, insbesondere voneinander beabstandeten Reihen aufnehmen, erfassen und/oder greifen zu können. Es sei somit festgehalten, dass die Zahl von wenigstens zwei gegenüberliegend angeordneten Klemm- und/oder Greifelementen ein Minimum definiert. Der Manipulator weist somit gemäß einer Ausführungsform mindestens einen Greiferkopf mit starren, beweglichen und/oder gegeneinander zustellbaren Klemmbacken auf, zwischen denen das mindestens eine Stückgut geklemmt und dadurch entsprechend zur Zielposition bewegt werden kann.

Der Manipulator ist insbesondere Teil eines sogenannten Gruppiermoduls, das weiterhin eine Horizontalfördereinrichtung umfasst, die dem Erfassungsbereich des mindestens einen Manipulators zugeordnet ist und/oder mit dem Erfassungsbereich des Manipulators zumindest weitgehend korrespondiert. Gemäß einer Ausführungsform der Erfindung erzeugt die Horizontalfördereinrichtung einen kontinuierlichen Vorschub in Transportrichtung der Stückgüter. Bei der Horizontalfördereinrichtung kann es sich beispielsweise analog zur Transporteinrichtung um einen Endlosförderer, eine Fördermatte o.ä. handeln, auf deren Oberseite die Stückgüter transportiert werden. Wie erst nachfolgend aus den Figuren deutlich werden wird, kann es sich bei der Horizontalfördereinrichtung wahlweise auch um einen sog. Transporttisch, Gleittisch oder Gruppiertisch o. dgl. handeln, der für die weitgehend oder annähernd konstante Bewegung der darauf befindlichen Stückgüter und/oder der darauf mittels des Manipulators in die jeweilige Zielposition verschobenen und/oder in die jeweilige Zielausrichtung gedrehten Stückgüter sorgen kann. Alternativ kann vorgesehen sein, dass die Horizontalfördereinrichtung beispielsweise aus mehreren nebeneinander angeordneten Förderbändern besteht, die sich alle mit gleicher Geschwindigkeit bewegen.

Auch müssen Transporteinrichtung und Horizontalfördereinrichtung nicht zwingend durch zwei voneinander unabhängig angetriebene Förderer gebildet werden. Stattdessen kann wahlweise auch vorgesehen sein, dass es sich hierbei nur um räumlich voneinander getrennte und in Förderrichtung aneinander anschließende Bereiche eines einzigen Förderers handelt. Ein erster Transportbereich dient in diesem Fall insbesondere dem Heranführen der zumindest weitgehend abstandslos in mindestens einer Reihe als Formation angeordneten Stückgüter. Ein zweiter Manipulationsbereich bzw. Horizontalförderbereich dient dann insbesondere der Manipulation von mindestens einem Stückgut der Formation bzw. einer Gruppe von benachbarten Stückgütern der Formation durch den Manipulator. Wichtig ist in diesem Zusammenhang, dass sich Stückgüter der Formation, die sich zwar im Erfassungsbereich des Manipulators befinden, aber durch diesen (noch) nicht erfasst und bearbeitet werden, annähernd kontinuierlich und vorzugsweise mit gleichbleibender Geschwindigkeit weiterbewegen.

Gemäß einer Ausführungsform der Erfindung bewegt sich der mindestens eine Manipulator oder ein zur Überführung des mindestens einen Stückgutes in die Zielposition und/oder Zielausrichtung vorgesehener Teil des mindestens einen Manipulators mit annähernd gleicher bzw. mit gleicher Geschwindigkeit gegenüber der wenigstens einen vorzugsweise unterbrechungsfrei angetriebenen Horizontalfördereinrichtung bei vollständiger Überführung des mindestens einen Stückgutes in die Zielposition und/oder Zielausrichtung. Dies gilt vorzugsweise zumindest während der Erfassung des Stückgutes bzw. der Stückgüter und unmittelbar vor und nach diesem Zeitpunkt, was auch als "Aufsynchronisieren" des Manipulators auf die sich bewegenden Stückgüter der Formation bezeichnet werden kann.

In diesem Fall sowie generell im Zusammenhang der vorliegenden Erfindung kann es sich bei dem zur Überführung des mindestens einen Stückgutes in die Zielposition und/oder Zielausrichtung vorgesehenen Teil des Manipulators beispielsweise um einen Werkzeugkopf, einen Greiferkopf o.dgl. handeln, der bspw. an beweglich gelagerten Auslegerarmen gehaltert und gelagert ist, welche Auslegerarme wiederum typischerweise an einem Gestell oder Rahmen o. dgl. gestellfest gelagert sind. Eine solche - auch als Parallelkinematik- Anordnung bekannte - Manipulatoraufhängung bzw. -anordnung ermöglicht die gewünschte Beweglichkeit des Kopfes (auch: des Manipulators), der die Stückgüter in der gewünschten Weise erfassen, verschieben, positionieren, platzieren, drehen etc. kann, um die Zielpositionen und/oder Zielausrichtungen für die Stückgüter anfahren zu können.

Vorzugsweise ist weiterhin vorgesehen, dass Stückgüter zweier direkt benachbarter Reihen der mindestens zwei parallelen Reihen im Wesentlichen ohne Abstand zueinander dem Erfassungsbereich zugeführt werden. Hierzu sind die Stückgüter der zwei direkt benachbarten Reihen entweder auf zwei direkt aneinandergrenzenden Transporteinrichtungen oder einer gemeinsamen Transporteinrichtung angeordnet.

Alternativ kann vorgesehen sein, dass zwischen den zwei direkt benachbarten Reihen ein definierter Abstand ausgebildet ist, der es ermöglicht, dass der Manipulator zwischen die beiden Reihen eingreifen kann und somit auch noch ein Stückgut einer der beiden Reihen erfassen und manipulieren kann. Sollen zwei Stückgüter von beiden Reihen gleichzeitig erfasst werden, so werden diese beim Erfassen durch den Manipulator, insbesondere durch dessen gegeneinander zustellbare Klemm- und/oder Greifelemente, zusammengeschoben.

Gemäß einer Ausführungsform werden die Stückgüter jeweils ohne Abstände zueinander oder mit minimalen Abständen zwischen den Stückgütern innerhalb jeder der wenigstens zwei parallelen Reihen bewegt und/oder zu einem - insbesondere Manipulationsbereich bzw. Erfassungsbereich genannten - Bereich befördert. D.h., die aufeinanderfolgenden Stückgüter einer Reihe werden bei dieser Ausführungsform als geschlossene Formation zum Erfassungsbereich transportiert. Mit dem Begriff der geschlossenen Formation ist eine weitgehend lückenlose Aufeinanderfolge von Stückgütern gemeint, die hintereinander transportiert werden. Die geschlossene Formation im Sinne der vorliegenden Erfindung kann eine endliche Länge haben und eine begrenzte Zahl von Stückgütern umfassen, wonach eine Lücke und einer solchen Lücke ggf. eine weitere solche Formation folgen kann, die nachfolgend transportiert wird. Eine solche Abfolge kann sich wiederholen, ggf. auch mehrfach, vielfach oder in unbestimmter Zahl. Die geschlossene Formation kann aber auch als Endlos- Formation transportiert werden, die keine Unterbrechung aufweist und eine beliebige Anzahl von Stückgütern umfasst. Aus dieser geschlossenen Formation wird wenigstens ein transportiertes Stückgut klemmend und/oder kraftschlüssig und/oder formschlüssig erfasst, von der geschlossenen Formation räumlich abgetrennt und in eine definierte relative Zielposition und/oder Zielausrichtung gegenüber nachfolgenden Stückgütern der Formation gebracht. Wenn im Zusammenhang der vorliegenden Erfindung von einer klemmenden Erfassung von Stückgütern die Rede ist, so umfasst dies ebenso eine kraftschlüssige und/oder reibschlüssige Erfassung, ein kraftschlüssiges und/oder reibschlüssiges Greifen bzw. Aufnehmen von Stückgütern. Alle diese Varianten des Aufnehmens, Erfassens und/oder Greifens von Stückgütern können gleichermaßen mit einem formschlüssigen Erfassen, Greifen bzw. Aufnehmen der Stückgüter kombiniert sein. Wenn im Zusammenhang der vorliegenden Erfindung von einer Zielposition und/oder Zielausrichtung die Rede ist, so kann dies insbesondere bedeuten, dass die Stückgüter erfasst, verschoben und/oder gedreht werden können, wobei die Stückgüter wahlweise auch nur verschoben (ohne Drehung) bzw. nur gedreht (ohne Verschiebebewegung) werden können. Beim Verschieben können die erfassten Stückgüter insbesondere fluchtend verschoben werden, so dass sie sich in der Zielposition in Transportrichtung mit einem größeren Abstand vor den nachfolgenden Stückgütern befinden. Weiterhin kann beim Verschieben eine Winkelkomponente aufgebracht werden, so dass die erfassten Stückgüter in der Zielposition mit seitlichem Versatz zu den nachfolgenden Stückgütern angeordnet werden. Werden die Stückgüter beim Verbringen in die Zielposition und/oder -ausrichtung gleichzeitig gedreht, so werden in Abhängigkeit vom zu bildenden Lagenschema Drehungen um 90°, 180° oder 270° bevorzugt.

Beim Zulauf der Stückgüter in jeweils geschlossener Formation innerhalb der mindestens zwei parallelen Reihen, wobei zwischen mindestens zwei direkt benachbarten Reihen kein oder nur ein definierter, insbesondere geringer Abstand ausgebildet ist, können in einer ersten Arbeitsposition die gegeneinander zustellbaren Klemm- und/oder Greifelemente des Manipulators zum Entgegennehmen von mindestens einem Stückgut aus jeder der mindestens zwei parallelen Reihen parallel zur Transportrichtung der zugeführten Stückgüter angeordnet werden, um gleichzeitig jeweils mindestens ein zuvorderst angeordnetes Stückgut jeder der mindestens zwei parallelen Reihen zu erfassen.

Als abweichende Option, die sich gleichwohl auf einige Ausführungsvarianten des erfindungsgemäßen Verfahrens zum Umgang in mindestens zwei parallelen Reihen hintereinander bewegten Stückgütern und/oder der erfindungsgemäßen Vorrichtung bezieht, können die Stückgüter in Abweichung hierzu auch in getaktetem Zulauf zum Manipulator bzw. zu dessen Erfassungsraum befördert werden. Darunter ist die Zuförderung von Stückgütern in den mindestens zwei parallelen Reihen zu verstehen, wobei zwischen den einzelnen Stückgütern jeweils definierte Abstände vorhanden sind. Weiterhin ist die Zuführung von Stückgutgruppen umfassend jeweils eine definierte Anzahl an mindestens zwei Stückgütern und Lücken zwischen solchen einzelnen Stückgütern und/oder Stückgutgruppen zu verstehen. In Abhängigkeit vom zu erstellenden Lagenschema können innerhalb einer Reihe beispielsweise entsprechend beabstandete Stückgüter und/oder Stückgutgruppen dem Erfassungsraum des Manipulators zugeführt werden, wobei zwischen den einzelnen Stückgütern und/oder Stückgutgruppen wahlweise gleiche oder unterschiedlich große Lücken ausgebildet sind. Eine solche Abfolge kann sich wiederholen, ggf. auch mehrfach, vielfach oder in unbestimmter Zahl, vorzugsweise in regelmäßiger Abfolge, ggf. jedoch auch in zyklisch regelmäßigen Mustern oder auch in unregelmäßiger Aufeinanderfolge.

Gemäß einer Ausführungsform ist vorgesehen, dass die Taktbildung direkt vor dem Eintritt der Stückgüter der mindestens zwei parallelen Reihen in den Erfassungsbereich des Manipulators erfolgt. Beispielsweise umfasst die Handhabungsvorrichtung hierfür mindestens ein Gruppierband zur Ausbildung von definierten Lücken zwischen den in mindestens zwei parallelen Reihen zugeführten Stückgütern und den nachfolgenden Stückgütern und/oder zur Ausbildung von Gruppen umfassend mindestens zwei Stückgüter und den nachfolgenden Stückgütern. Insbesondere kann jeder der mindestens zwei parallelen Reihen ein eigenes Gruppierband zugeordnet sein. Alternativ kann auch ein gemeinsames Gruppierband vorgesehen sein, so dass jeweils gleiche Lücken zwischen den getakteten Stückgütern und/oder Stückgutgruppen der mindestens zwei parallelen Reihen ausgebildet werden. Werden dagegen mehrere Gruppierbänder verwendet, so kann es insbesondere notwendig sein, direkt benachbarte Gruppierbänder entsprechend zu synchronisieren, um jeweils gleiche Takte innerhalb direkt benachbarter Reihen zu erzeugen.

Besonders bevorzugt werden hierbei auf zwei oder mehr direkt benachbarten Reihen die Stückgüter in jeweils gleiche, synchron in den Erfassungsbereich einlaufende einzelne Stückgüter oder Stückgutgruppen unterteilt. Bei einer Ausführungsform mit mindestens drei parallelen Reihen kann beispielsweise vorgesehen sein, dass auf allen Reihen identische Takte von einzelnen Stückgütern oder Stückgutgruppen ausgebildet werden. Alternativ kann vorgesehen sein, dass beispielsweise nur auf zwei direkt benachbarten parallelen Reihen synchron eine Abtrennung eines einzelnen Stückgutes oder einer Stückgutgruppe je Reihe erfolgt, während die Stückgüter der dritten und ggfl. weiterer Reihen unverändert dem Erfassungsbereich zugeführt werden.

Gemäß einer Ausführungsform werden in einem Verfahrensschritt mindestens zwei Stückgüter oder Stückgutgruppen von mindestens zwei benachbarten parallelen Reihen erfasst, wobei die zwei Stückgüter oder Stückgutgruppen jeweils durch eine Lücke von den nachfolgenden Stückgütern der mindestens zwei parallelen Reihen vorab beabstandet worden sind, und von den nachfolgenden Stückgütern räumlich abgetrennt und in eine definierte relative Zielposition und/oder -ausrichtung gegenüber den nachfolgenden Stückgütern gebracht werden.

Bei einer getakteten Zuführung einzelner Stückgüter und/oder Stückgutgruppen in mindestens zwei parallelen Reihen kann der Manipulator in einer zweiten Arbeitsposition derart ausgerichtet werden, dass die die gegeneinander zustellbaren Klemm- und/oder Greifelemente zum Entgegennehmen von mindestens einem Stückgut aus jeder der mindestens zwei parallelen Reihen senkrecht zur Transportrichtung der zugeführten Stückgüter angeordnet werden, wobei insbesondere eines der Klemm- und/oder Greifelemente in Transportrichtung vor den zu erfassenden Stückgütern angeordnet wird und das andere Klemm- und/oder Greifelement in Transportrichtung hinter den zu erfassenden Stückgütern angeordnet wird, insbesondere innerhalb der Lücke zwischen den zu erfassenden Stückgütern und den nachfolgenden Stückgütern.

Vorzugsweise ist vorgesehen, dass zu dem Zeitpunkt des Erfassens mindestens eines Stückgutes zwischen diesem und den direkt nachfolgenden Stückgütern der jeweiligen Reihe kein Staudruck oder allenfalls ein sehr geringer Staudruck besteht bzw. herrscht. Sollte sich beim Heranführen der Stückgüter dennoch ein Staudruck aufgebaut haben, so ist dieser vorzugsweise vor dem Erfassen mindestens eines Stückgutes durch geeignete Mittel abzubauen; beispielsweise kann dies durch Auswahl einer geeigneten Oberfläche der Transporteinrichtung für die in Reihe hintereinander bewegten Stückgütern erreicht werden. Insbesondere kann vorgesehen sein, dass die Oberfläche der Transporteinrichtung gummiert ist, um ein Verrutschen der Stückgüter auf der Transporteinrichtung zu verhindern bzw. um den Staudruck der ständig nachgeförderten Stückgutreihe abzubauen bzw. zumindest signifikant zu reduzieren.

Bei dem Erfassen des mindestens einen Stückgutes mindestens einer der wenigstens zwei parallelen Reihen wird dieses in seiner Bewegung in Transportrichtung der Stückgutreihe normalerweise nicht abgebremst. Stattdessen erhält das mindestens eine Stückgut nach dem Erfassen durch den Manipulator der Vorrichtung mindestens eine zusätzliche Geschwindigkeits- und/oder Richtungskomponente, wobei die Geschwindigkeitskomponente nicht negativ gegenüber der Geschwindigkeit der Stückgüter in der Reihe sein darf und die Richtungskomponente nicht entgegen der Transportrichtung der Stückgüter in der Reihe gerichtet sein darf. Ansonsten bestünde eine Kollisionsgefahr zwischen dem erfassten Stückgut und dem nachfolgenden, nunmehr zuvorderst befindlichen Stückgut der jeweiligen Reihe.

Der Manipulator kann beim Abgreifen der Stückgüter symmetrisch oder asymmetrisch beladen werden. Bei einer symmetrischen Beladung sind die Klemm- und/oder Greifelemente jeweils über ihre gesamte Länge in Kontakt mit erfassten Stückgütern. Bei einer asymmetrischen Beladung sind die Klemm- und/oder Greifelemente dagegen nur über eine sich von einem freien Ende erstreckende erste Teillänge Länge in Kontakt mit erfassten Stückgütern. Der sich zum gegenüberliegenden freien Ende der Klemm- und/oder Greifelemente erstreckende zweite Teilbereich ist dagegen frei.

Weiterhin kann vorgesehen sein, dass die Zustellbewegung der Klemm- und/oder Greifelemente des Manipulators verwendet werden kann, um einen geeigneten Abstand der Klemm- und/oder Greifelemente bereits vor dem Abgreifen der Stückgüter anzupassen und/oder einzustellen. Werden die Stückgüter beispielsweise in drei oder mehr parallelen Reihen zugeführt, so kann es in einem Verfahrensschritt notwendig sein, benachbarte Stückgüter aus zwei parallelen Reihen abzugreifen, während in einem späteren Verfahrensschritt dagegen Stückgüter aus drei parallelen Reihen oder aber aus einer einzelnen Reihe abzugreifen. Hierbei ist es vorteilhaft, den geeigneten Abstand zwischen den Klemm- und/oder Greifelemente vorab anzupassen, bevor der Manipulator die Stückgüter erfasst, um eine Kollision der Klemm- und/oder Greifelemente mit den zu erfassenden Stückgütern und/oder mit nicht zu erfassenden Stückgütern, beispielsweise von benachbarten parallelen Reihen, zu vermeiden.

Vorzugsweise kann weiterhin vorgesehen sein, dass die Vorrichtung bzw. die Handhabungsvorrichtung eine Steuerungseinrichtung zum Ansteuern des Manipulators umfasst, die insbesondere durch eine prozessorgesteuerte Steuerungseinheit gebildet sein kann, die mit variablen und/oder programmierbaren Steuerungsprogrammen ausgestattet sein kann. Insbesondere steuert diese Steuerungseinrichtung den Manipulator derart, dass dieser mindestens ein Stückgut von mindestens einer der mindestens zwei zuführenden Reihen klemmend und/oder kraft- und/oder formschlüssig erfasst, das mindestens eine erfasste Stückgut räumlich abtrennt und in die jeweilige definierte Zielposition und/oder Zielausrichtung bringt. Wahlweise steuert diese Steuerungseinrichtung auch zwei oder mehr Manipulatoren derart, dass diese jeweils mindestens ein erfasstes Stückgut klemmend und/oder form- und /oder kraftschlüssig erfassen, das jeweils mindestens eine erfasste Stückgut räumlich abtrennen und in die jeweiligen definierten Zielpositionen und/oder Zielausrichtungen bringen.

Die Steuerungseinrichtung enthält typischerweise Informationen zu einer großen Variantenvielzahl; bzw. in der Steuerungseinrichtung können insbesondere Informationen zu einer aus einer Vielzahl an Stückgütern zu bildenden Gruppierung für eine palettierfähige Lage oder auch für unterschiedliche Lagenbilder abgespeichert sein. Hierbei bilden die jeweiligen Zielpositionen und/oder Zielausrichtungen der Stückgüter einen Teil der Informationen, die dem jeweiligen mindestens einen Stückgut eine bestimmte Lage und/oder relative Orientierung in der jeweiligen Gruppierung zuordnen.

Die Steuerungseinrichtung kann zusätzlich die Fördermittel der Handhabungsvorrichtung, beispielsweise die mindestens eine Stückgüter zuführende Transporteinrichtung und die mindestens eine Horizontalfördereinrichtung des Gruppiermoduls ansteuern und regulieren. Weiterhin kann vorgesehen sein, dass die Steuerungseinrichtung das mindestens eine Gruppierband zu Taktbildung und Abtrennung einzelner Stückgüter und/oder Stückgutgruppen von den in mindestens zwei parallelen Reihen zugeführten Stückgütern ansteuert und/oder reguliert, um die Takte entsprechend des gewünschten Lagenschemas für den Manipulator vorzubereiten.

Ein besonderer Vorteil des Verfahrens und der Vorrichtung besteht darin, dass der Manipulator eine Gruppierung und/oder Ausrichtung von mindestens einem Stückgut in einem einzigen Manipulationsschritt durchführen kann. Mit dem erfindungsgemäßen Verfahren und der erfindungsgemäßen Vorrichtung können somit Betriebskosten im laufenden Verpackungs- und/oder Palettierungsbetrieb sowie auch Systemkosten eingespart werden, da weniger Antriebe im Stückgut- Zulauf benötigt werden. Zudem kann die Leistung und somit der Durchsatz gegenüber den herkömmlich bekannten Systemen deutlich erhöht werden.

Die Erfindung bezieht sich weiterhin auf eine Förder-, Verarbeitungs- und/oder Verpackungsanlage nach Anspruch 7, für Stückgüter mit einer vorbeschriebenen Vorrichtung zum Umgang mit in mindestens zwei parallelen Reihen bewegten Stückgütern. Die Vorrichtung kann alternativ oder zusätzlich zu den beschriebenen Merkmalen ein oder mehrere Merkmale Eigenschaften des zuvor beschriebenen Verfahrens umfassen. Ebenfalls kann das Verfahren alternativ oder zusätzlich einzelne oder mehrere Merkmale Eigenschaften der beschriebenen Vorrichtung aufweisen.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figuren 1 bis 4 zeigen schematisch einen zeitlichen Ablauf eines ersten Ausführungsbeispiels eines erfindungsgemäßen Verfahrens zum Umgang mit in mindestens zwei parallelen Reihen hintereinander bewegten Stückgütern durch eine entsprechend hierfür ausgestattete Handhabungsvorrichtung.
Figuren 5 bis 13 zeigen schematisch einen zeitlichen Ablauf eines zweiten Ausführungsbeispiels eines erfindungsgemäßen Verfahrens zum Umgang mit drei parallelen Reihen hintereinander bewegten Stückgütern durch eine entsprechend hierfür ausgestattete Handhabungsvorrichtung.
Fig. 14 zeigt eine weitere Möglichkeit des Abgreifens von in mindestens zwei parallelen Reihen zugeführten Stückgütern.

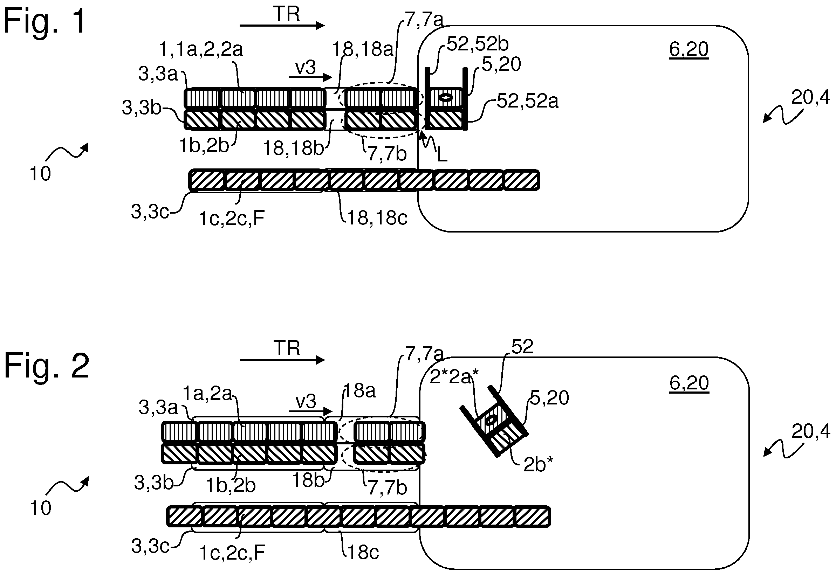

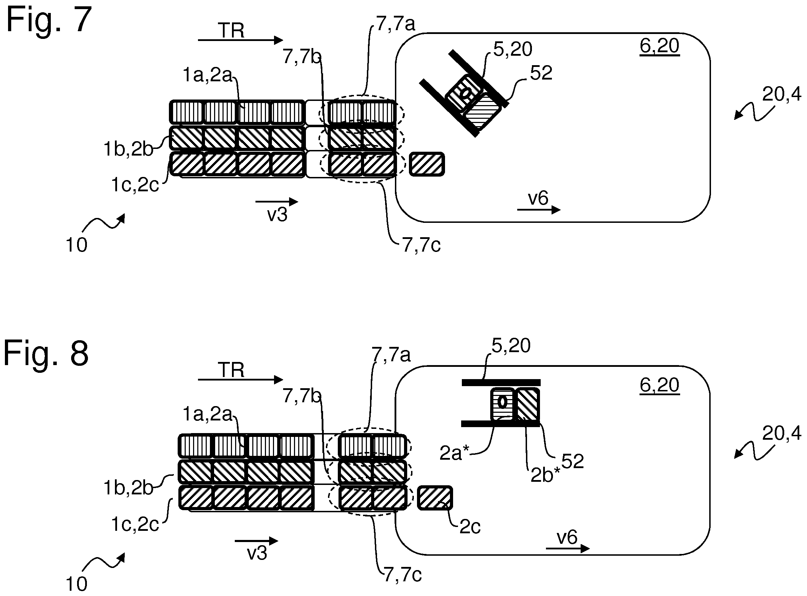

Für gleiche oder gleich wirkende Elemente der Erfindung werden in den Figuren 1 bis 14 jeweils identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

Die Figuren 1 bis 4 zeigen in schematischen Draufsichten einen sinnvollen zeitlichen Ablauf eines ersten Ausführungsbeispiels eines Verfahrens zum Umgang mit in mindestens zwei parallelen Reihen 1, 1a, 1b, 1c hintereinander bewegten Stückgütern 2, 2a, 2b, 2c durch eine entsprechend hierfür ausgestattete Handhabungsvorrichtung 10.

Die gezeigte Handhabungsvorrichtung 10 umfasst drei parallele Transporteinrichtungen 3, 3a, 3b, 3c, über welche unmittelbar aufeinanderfolgende Stückgüter 2a, 2b, 2c unterbrechungsfrei und/oder mit kontinuierlicher Transportgeschwindigkeit v3 in einen Erfassungsbereich 4 mindestens eines Manipulators 5 eines Gruppiermoduls 20 der Handhabungsvorrichtung 10 transportiert werden. Hierbei werden die Stückgüter 2a, 2b in den direkt benachbarten Reihen 1a, 1b derart nah beieinander transportiert werden, dass sich die Stückgüter 2a, 2b der direkt benachbarten Reihen 1a, 1b im Wesentlichen kontaktieren. Die dritte Reihe 1c ist bei diesem Ausführungsbeispiel seitlich beabstandet zu den Reihen 1a, 1b angeordnet. Der Erfassungsbereich 4 meint im vorliegenden Zusammenhang insbesondere den maximalen und/oder den jeweils programmgesteuert vorgegebenen Bewegungsraum des Manipulators 5. Der Erfassungsbereich 4 bzw. dessen äußere räumliche Begrenzung kann größer sein als es die Außengrenzen der Horizontalfördereinrichtung 6 vorgeben, auf deren ungefähr horizontalen Oberseite die Stückgüter 2a, 2b, 2c befördert und/oder mittels des Manipulators 5 positioniert und/oder verschoben werden. Normalerweise jedoch ist der Erfassungsbereich 4 des Manipulators 5 der sinnvolle Bewegungsbereich, in dem sich zu erfassende Stückgüter 2a, 2b, 2c befinden können und/oder in dem erfassten Stückgüter 2*; 2a*, 2b*, 2c* abgesetzt und positioniert werden können.

Die hier in den Figuren 1 bis 4 gezeigten Reihen 1, 1a, 1b, 1c von Stückgüter 2, 2a, 2b, 2c können bspw. in dieser Anordnung ununterbrochen fortlaufend in Transportrichtung TR auf den Transporteinrichtungen 3a, 3b, 3c befördert werden. Vermittels von zwischen den Transporteinrichtungen 3a, 3b, 3c und dem Gruppiermodul 20 angeordneten Gruppierbändern 18, 18a, 18b, 18c werden von den in geschlossenen Reihen 1a, 1b zugeführten Stückgütern 2a, 2b jeweils Stückgutgruppen 7a, 7b abgetrennt. Insbesondere bzw. vorzugsweise arbeiten die Gruppierbänder 18a, 18b synchron, so dass korrespondierende Stückgutgruppen 7a, 7b mit jeweils gleicher Anzahl an Stückgüter 2a, 2b gebildet werden. Die Transporteinrichtung 3a, 3b, 3c und die Gruppierbänder 18a, 18b, 18c sind (nur) in Fig. 2 zur Verdeutlichung verbreitert dargestellt.

Die Anzahl der Stückgüter 2a, 2b in den jeweilig gebildeten Stückgutgruppen 7a, 7b richten sich sinnvollerweise nach dem jeweils gewünschten Lagenschema bzw. nach der Verarbeitungsgeschwindigkeit des eingesetzten Manipulators 5 bzw. nach den während eines regulären Betriebes auf Dauer aufrechtzuerhaltenden maximalen Bewegungsgeschwindigkeiten der beweglichen Teile des Manipulators 5.

Stückgüter 2 im Sinne der vorliegenden Erfindung bzw. des beschriebenen Ausführungsbeispiels können bspw. einzelne Artikel, Pakete oder Gebinde sein. Pakete oder Gebinde können bspw. Schrumpffoliengebinde und/oder Umreifungsgebinde o. dgl. mehr sein, wobei normalerweise mehrere Artikel wie insbesondere Behälter, Flüssigkeits- und/oder Getränkebehälter zu Gebinden zusammengefasst sind. Die Artikel, Pakete oder Stückgüter im Sinne der Erfindung können jedoch grundsätzlich quaderförmige oder anders geformte Pakete der unterschiedlichsten Art sein, die sich mittels des erwähnten Manipulators 5 störungsfrei erfassen und greifen lassen.

Wie bereits erwähnt, ist es optional möglich, dass die Stückgüter 2, 2a. 2b auf einer Transporteinrichtung 3 oder auf mehreren, insbesondere parallel angeordneten Transporteinrichtungen 3a, 3b, 3c mehrreihig, insbesondere in mehreren Parallelreihen zum Erfassungsbereich 4 des Manipulators 5 des Gruppiermoduls 20 hin transportiert werden. Die Parallelreihen 1a, 1b, 1c können dabei seitlich beabstandet zueinander (d.h. quer zur Transportrichtung TR beabstandet) oder weitgehend ohne Abstand zueinander auf der wenigstens einen Transporteinrichtung 3 transportiert werden.

Der Manipulator 5 ist zum klemmenden und/oder formschlüssigen und/oder kraftschlüssigen Entgegennehmen von Stückgütern 2a, 2b, 2c innerhalb des Erfassungsbereichs 4 vorzugsweise mit zwei gegeneinander zustellbaren Greiferbacken 52 ausgebildet und ausgestattet. Die vom Manipulator 5 erfassten Stückgüter 2a, 2b, 2c werden nachfolgend zur Unterscheidung von einlaufenden Stückgütern 2a, 2b, 2c mit dem Bezugszeichen 2*, 2a*, 2b*, 2c* bezeichnet.

Beispielsweise greift der Manipulator 5 mindestens ein, vorzugsweise mindestens zwei oder drei Stückgüter, trennt diese ab und überführt das abgetrennte Stückgut bzw. die abgetrennte Gruppe von zwei oder drei Stückgütern jeweils in eine Zielposition und/oder Zielausrichtung. Gemäß Fig. 1 wurden bereits vermittels der Gruppierbänder 18a, 18b jeweils ein Stückgut 2a, 2b von den über die Transporteinrichtungen 3a, 3b einlaufenden Reihen 1a, 1b abgetrennt. Der Manipulator 5 wird derart ausgerichtet, dass die Greiferbacken 52 des Manipulators 5 senkrecht zur Transportrichtung TR der Stückgüter 2a, 2b angeordnet sind (vgl. Fig. 1). Insbesondere ist eine erste Greiferbacke 52a in Transportrichtung TR vor den abzugreifenden Stückgütern 2a, 2b angeordnet und eine zweite Greiferbacke 52b ist in Transportrichtung TR in der Lücke L zwischen den abzugreifenden Stückgütern 2a, 2b und den nachgeordneten Stückgütern 2a, 2b angeordnet. Die von den nachlaufenden Stückgütern 2a, 2b vermittels der Gruppierbänder 18a, 18b beabstandeten beiden Stückgüter 2a, 2b werden durch den Manipulator 5 gemeinsam gegriffen, von den nachfolgenden Stückgütern 2a, 2b abgetrennt und in eine Zielposition P1 gebracht, wobei die Einheit der zwei gegriffenen Stückgüter 2a*, 2b* bei dem Überführen in die Zielposition P1 durch den Manipulator 5 um 90° gedreht wird.

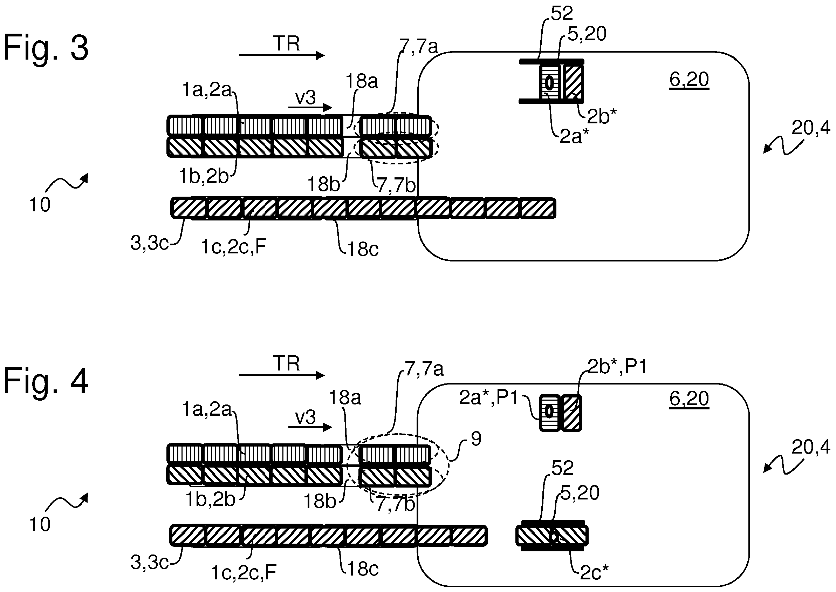

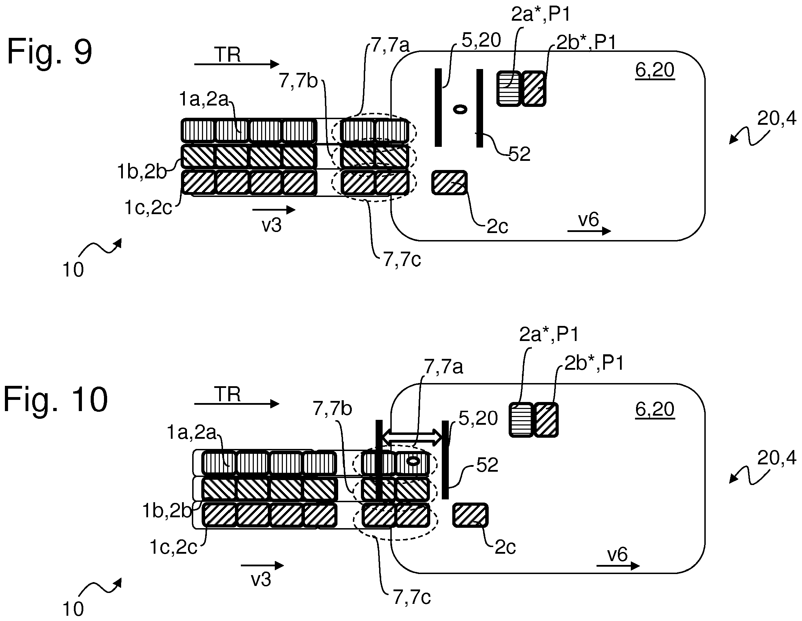

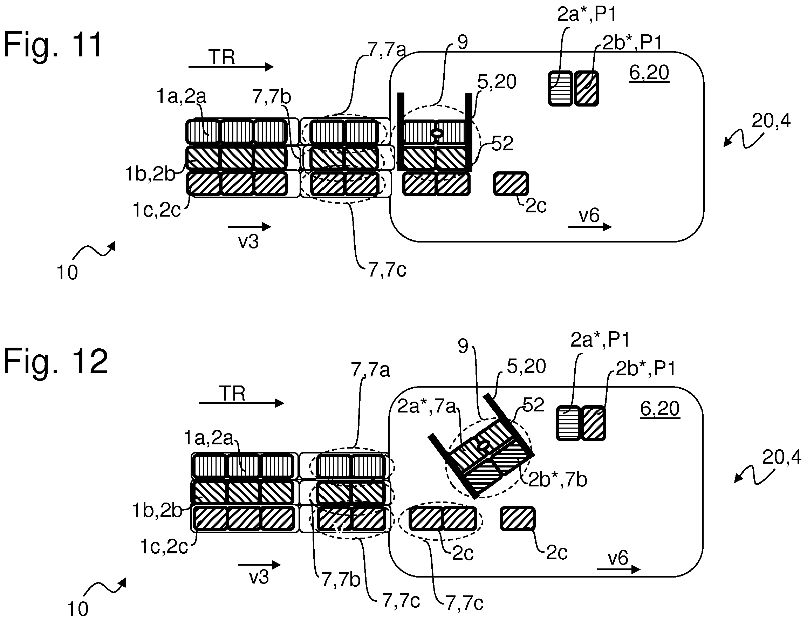

Anschließend werden, wie dies in Fig. 4 beispielhaft dargestellt ist, die zwei vordersten Stückgüter 2c der beabstandeten Reihe 1c gegriffen und beispielsweise durch Verschieben in Fluchtung zur Reihe 1c in eine neue Zielposition (nicht abschließend dargestellt) verbracht. Während die vorbeschriebenen Verfahrensschritte ablaufen, werden durch die Gruppierbänder 18a, 18b jeweils zwei Stückgüter 2a, 2b von den einlaufenden Reihen 1a, 1b als Stückgutgruppen 7a, 7b abgetrennt und zum Abgreifen durch den Manipulator 5 in einem weiteren nicht dargestellten Verfahrensschritt vorbereitet. Insbesondere ist vorgesehen, dass der Manipulator 5 beide Stückgutgruppen 7a, 7b gleichzeitig erfasst. Hierzu werden die Greiferbacken 52 des Manipulators entsprechend auseinander bewegt, um die Einheit 9 aus den beiden Stückgutgruppen 7a, 7b umfassend insgesamt vier Stückgüter 2a, 2b aufnehmen zu können (dies insbesondere analog zu nachfolgend beschriebenen Figuren 10 und 11).

Während von den Reihen 1a, 1b vermittels der Gruppierbänder 18a, 18b in den dargestellten Verfahrensschritten Lücken L zwischen einzelnen zuvorderst angeordneten Stückgütern 2a, 2b oder Stückgutgruppen 7a, 7b abgetrennt werden, werden die Stückgüter 2c innerhalb der Reihe 1c ohne Abstände zueinander in so genannter geschlossener Formation F zugeführt. D.h., das Gruppierband 18c wird kontinuierlich mit derselben Geschwindigkeit bewegt wie die vorgeschaltete Transporteinrichtung 3c. Hierbei kann es unter Umständen sinnvoll sein, dass die Transporteinrichtung 3c mit einer anderen Transportgeschwindigkeit bewegt wird wie die Transporteinrichtungen 3a und 3b. In weiteren, nicht dargestellten Verfahrensschritten, kann nunmehr in den Reihe(n) 1a und/oder 1b auf eine lückenlose Zufuhr von Stückgüter 2a und/oder 2b umgeschaltet werden, indem die Gruppierbänder 18a, 18b mit jeweils derselben Geschwindigkeit bewegt werden wie die zuführenden Transporteinrichtungen 3a, 3b. Ebenso kann es je nach auszubildendem Lagenschema sinnvoll sein, aus der Reihe 1c vermittels des Gruppierbandes 18c Stückgüter 2c oder Stückgutgruppen umfassend mindestens zwei Stückgüter 2c von den nachfolgenden Stückgütern 2c der Reihe 1c abzutrennen. Ebenso wäre denkbar, dass die Stückgutzufuhr der Stückgüter 2c der Reihe 1c durch eine sich bis zur Horizontalfördereinrichtung 6 erstreckende Transporteinrichtung 3c erfolgt, so dass insbesondere auf ein Gruppierband 18c verzichtet werden kann.

Wenn im vorliegenden Fall bzw. generell im Zusammenhang der vorliegenden Erfindung generalisierend von einem Manipulator 5 die Rede ist, kann es sich konkret bei dem zur Überführung des mindestens einen Stückgutes 2a*, 2b*, 2c* in die Zielposition P1 und/oder Zielausrichtung vorgesehenen Teil des Manipulators 5 beispielsweise um einen Werkzeugkopf, einen Greiferkopf o.dgl. handeln, der bspw. an beweglich gelagerten Auslegerarmen gehaltert und gelagert ist, welche Auslegerarme wiederum typischerweise an einem Gestell oder Rahmen o. dgl. gestellfest gelagert sein können, wie es beispielsweise in der DE 10 2016 113 448 A1 offenbart. Eine solche - auch als Parallelkinematik-Anordnung bekannte - Manipulatoraufhängung bzw. Manipulatoranordnung ermöglicht die gewünschte Beweglichkeit des Greiferkopfes (auch: des Manipulators 5), der die Stückgüter 2a*, 2b*, 2c* in der gewünschten Weise erfassen, verschieben, positionieren, platzieren, drehen etc. kann, um die jeweiligen Zielpositionen P1, P2 und/oder Zielausrichtungen für die Stückgüter 2a*, 2b*, 2c* anfahren zu können. Ebenso denkbar sind jedoch auch andere geeignete Manipulatorkonfigurationen, bspw. solche mit Portalroboter-Führungen und/oder -aufhängungen oder ähnlichem. Diese anderen oder altnerativen Manipulatorkonfigurationen können sich wahlweise auf einzelne, mehrere oder alle Ausführungsvarianten beziehen, die im Zusammenhang der vorliegenden Figurenbeschreibung und/oder der gesamten Erfindungsbeschreibung erwähnt sind.

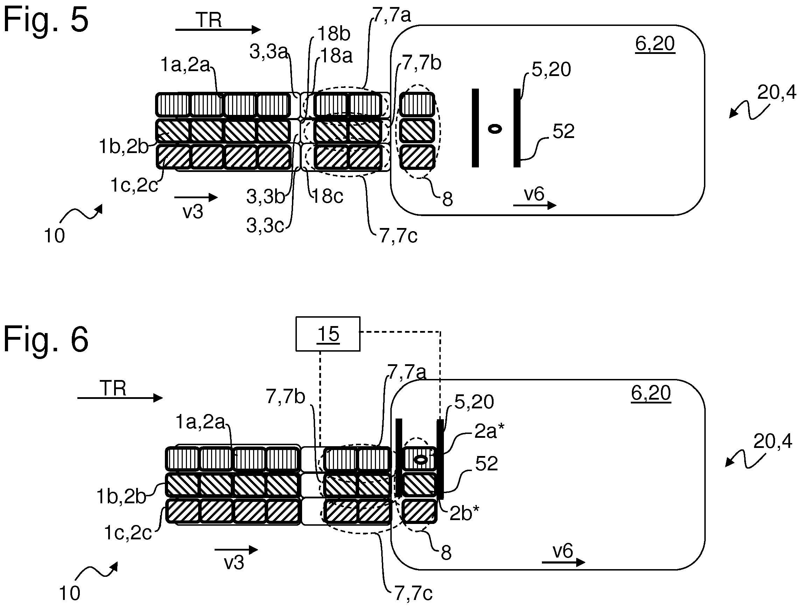

Die schematischen Draufsichten der Figuren 5 bis 13 zeigen in schematischer bzw. vereinfachter Weise einen zeitlichen Ablauf eines zweiten Ausführungsbeispiels des erfindungsgemäßen Verfahrens zum Umgang mit drei parallelen Reihen 1a, 1b, 1c hintereinander bewegten Stückgütern 2a, 2b, 2c durch eine entsprechende Handhabungsvorrichtung 10. Hierbei werden die Stückgütern 2a, 2b, 2c in den Parallelreihen 1a, 1b, 1c im Wesentlichen direkt aneinandergrenzend befördert. Analog zu dem in den Figuren 1 bis 4 dargestellten Ausführungsbeispiel ist zur Ausbildung definierter Lücken zwischen Stückgütern 2a, 2b, 2c bzw. zu Ausbildung von Gruppen 7a, 7b, 7c von Stückgütern 2a, 2b, 2c innerhalb einer Reihe 1a, 1b, 1c zwischen der jeweiligen Transporteinrichtung 3a, 3b, 3c und der Horizontalfördereinrichtung 6 des Gruppiermoduls 20 jeweils ein Gruppierband18a, 18b, 18c angeordnet. Die Gruppierbänder 18a, 18b, 18c können synchron oder in Abhängigkeit vom auszubildenden Lagenschema auch unterschiedlich angesteuert werden, insbesondere durch Vorgabe einer nur in Fig. 6 beispielhaft dargestellten Steuerungseinrichtung 15. Beispielsweise wurde gemäß Fig. 5 zuerst jeweils ein Stückgut 2a, 2b, 2c von jeder Reihe 1a, 1b, 1c abgetrennt und nachfolgend wurde jeweils eine Gruppe 7a, 7b, 7c abgetrennt, wobei jeder der Gruppen 7a, 7b, 7c jeweils zwei Stückgüter 2a, 2b, 2c umfasst. Die Einheit 8 umfassend jeweils ein Stückgut 2a, 2b und 2c befindet sich bereits innerhalb des Erfassungsbereichs 4 des Manipulators 5, während sich die Gruppen 7a, 7b, 7c noch auf den jeweiligen Gruppierbändern 18a, 18b, 18c befinden. Von der Einheit 8 werden in Fig. 6 zwei Stückgüter 2a* und 2b* durch den Manipulator 5 asymmetrisch abgegriffen und eine Zielposition P1 überführt. Dabei werden die gemeinsam gegriffenen Stückgüter 2a*, 2b* um 90° gedreht, so dass die ursprünglich in Transportrichtung TR nebeneinander angeordneten Stückgüter 2a*, 2b* in der Zielposition P1 in Transportrichtung TR hintereinander angeordnet sind. Das Stückgut 2c der Einheit 8 wird dagegen mit unveränderter Transportgeschwindigkeit v6 durch die Horizontalfördereinrichtung 6 in Transportrichtung TR bewegt (vgl. Figuren 6 bis 9).

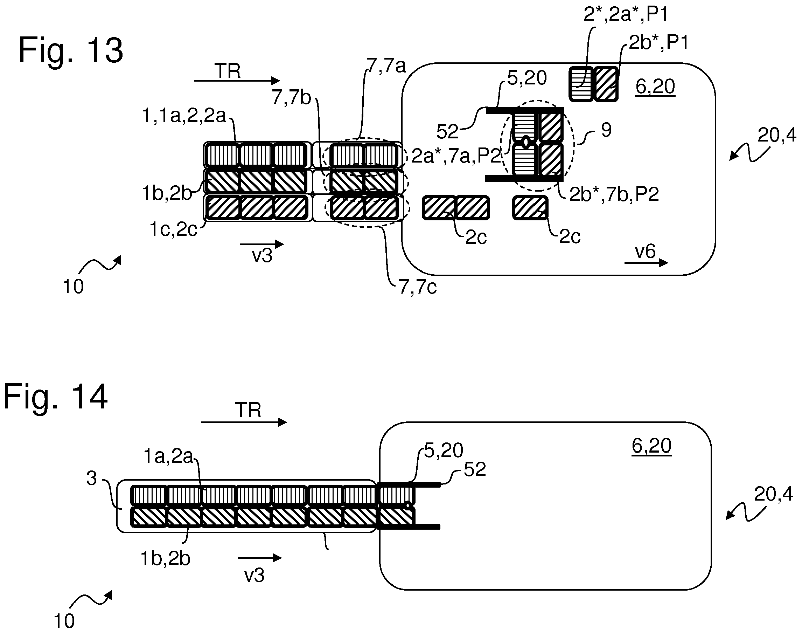

Die Greiferbacken 52 des Manipulators 5 sind zueinander distanzvariabel, d.h., der Abstand zwischen den Greiferbacken 52 kann gemäß der Anzahl und/oder Art und/oder Größe der abzugreifenden Stückgüter 2 variabel eingestellt werden. Um eine Einheit 9 umfassend vier Stückgüter 2a, 2b, insbesondere bestehend aus zwei Stückgutgruppen 7a, 7b, abzugreifen, werden die Greiferbacken 52 entsprechend weiter voneinander beabstandet (vgl. Figuren 10 und 11). Die Einheit 9 wird durch den Manipulator 5 unter Drehung der Einheit 9 um 90° in eine Zielposition P2 auf der Horizontalfördereinrichtung 6 befördert und angeordnet. Die zwei Stückgüter 2c umfassende Stückgutgruppe 7c wird dagegen mit unveränderter Transportgeschwindigkeit v6 durch die Horizontalfördereinrichtung 6 in Transportrichtung TR bewegt (vgl. Figuren 12 und 13). Obwohl der Manipulator 5 im gezeigten Beispiel immer nur Stückgüter 2a, 2b der Reihen 1a, 1b gemeinsam abgreift, kann es in Abhängigkeit vom zu bildenden Lagenschema auch möglich und/oder notwendig sein, Stückgüter 2a, 2b, 2c aller drei Reihen 1a, 1b, 1c gleichzeitig abzugreifen und/oder gleichzeitig Stückgüter 2b, 2c der Reihen 1b, 1c abzugreifen und stattdessen entsprechend nicht abgegriffene Stückgüter 2a der Reihe 1a mit unveränderter Transportgeschwindigkeit v6 weiter zu transportieren etc. Ebenso kann vorgesehen sein, dass beispielsweise vermittels eines Gruppierbandes 18a eine Gruppe 7a von zwei Stückgüter 2a von der über die Transporteinrichtung 3a einlaufenden Reihe 1a abzutrennen, die anschließend durch den Manipulator 5 erfasst und in eine Zielposition überführt wird, während die Stückgüter 2b, 2c der Reihen 1b, 1c unverändert dem Gruppiermodul 20 zugeführt werden. Weitere Varianten sind für den Fachmann denkbar und sollen ebenfalls von der Anmeldung umfasst sein.

Die weitere schematische Draufsicht der Fig. 14 zeigt eine weitere Möglichkeit des Abgreifens von in mindestens zwei parallelen Reihen 1a, 1b zugeführten Stückgütern 2a, 2b. Bei den in den Figuren 1 bis 13 gezeigten Ausführungsbeispielen wird immer eine Lücke zwischen den abzugreifenden Stückgütern 2a, 2b und/oder 2c und den nachlaufenden Stückgütern 2a, 2b und/oder 2c der Reihen 1a, 1b und/oder 1c ausgebildet. Die Greiferbacken 52 des Manipulators 5 werden senkrecht zur Transportrichtung TR angeordnet und greifen die beabstandeten Stückgüter 2a, 2b und/oder 2c entsprechend ab. Gemäß der in Fig. 14 dargestellten Ausführungsform kann der Manipulator 5 auch mit parallel zur Transportrichtung TR angeordneten Greiferbacken 52 verwendet werden, um in benachbarten parallelen Reihen 1a, 1b lückenlos einlaufende Stückgüter 2a, 2b entsprechend abzugreifen.

Bei allen hier dargestellten Ausführungsbeispielen kann ein symmetrisches oder auch ein asymmetrisches Abgreifen von Stückgütern 2a, 2b, 2c durch den Manipulator 5 erfolgen. Unter symmetrischem Abgreifen versteht man insbesondere das gleichmäßige Beladen des Manipulators 5 mit Stückgütern 2a, 2b und/oder 2c. wie es beispielsweise in Fig. 4 dargestellt ist. Unter asymmetrischen Abgreifen versteht man insbesondere die Situation, wenn das mindestens eine vom Manipulator 5 erfasste Stückgut 2a*, 2b* und/oder 2c* dort nicht mittig bzw. symmetrisch zu einer vertikalen Mittel- und/oder Drehachse des Manipulators 5 bzw. dessen Greiferbacken 52 erfasst und positioniert ist, während es verschoben und/oder in Richtung der Zielposition P1, P2 gebracht wird, ggf. unter gleichzeitiger Rotation. Dies gilt gleichermaßen für zwei oder mehr erfasste Stückgüter 2a*, 2b* und/oder 2c*, die ebenfalls außermittig bzw. asymmetrisch im Manipulator 5 geklemmt sein können.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind. Die Erfindung wurde unter Bezugnahme auf bevorzugte Ausführungsformen beschrieben. Es ist für einen Fachmann vorstellbar, dass Abwandlungen oder Änderungen der Erfindung gemacht werden können, ohne dabei den Schutzbereich der nachstehenden Ansprüche zu verlassen. Es ist möglich, einige der Komponenten oder Merkmale eines der Beispiele in Kombination mit Merkmalen oder Komponenten eines anderen Beispiels anzuwenden.

### Bezuaszeichenliste

- 1, 1a, 1b, 1c: Reihe
- 2, 2a, 2b, 2c: Stückgut
- 2, 2a*, 2b*, 2c*: erfasstes Stückgut
- 3, 3a, 3b, 3c: Transporteinrichtung
- 4: Erfassungsbereich
- 5: Manipulator
- 6: Horizontalfördereinrichtung
- 7, 7a, 7b, 7c: Stückgutgruppe
- 8: Einheit
- 9: Einheit
- 10: Handhabungsvorrichtung
- 15: Steuerungseinrichtung
- 18, 18a, 18b, 18c: Gruppierband
- 20: Gruppiermodul
- 52, 52a, 52b: Greiferbacke

- L: Lücke
- P1, P2: Zielposition
- TR: Transportrichtung
- v3: Transportgeschwindigkeit
- v6: Transportgeschwindigkeit

## Patentansprüche

1. Vorrichtung (10) zum Umgang mit in mindestens zwei parallelen Reihen (1) bewegten Stückgütern (2), umfassend
- mindestens einen Manipulator (5) für Stückgüter (2) und
- wobei die Vorrichtung (10) drei parallele Transporteinrichtungen (3) umfasst, über welche unmittelbar aufeinanderfolgende und in drei parallelen Reihen (1) angeordnete Stückgüter (2) unterbrechungsfrei und/oder mit kontinuierlicher Transportgeschwindigkeit (v3) in einer Transportrichtung (TR) in einen Erfassungsbereich (4) des mindestens einen Manipulators (5) transportierbar sind,
- wobei der mindestens eine Manipulator (5) zum klemmenden und/oder kraft- und/oder formschlüssigen Entgegennehmen sowie zum Abtrennen und Überführen in eine Zielposition (P1, P2) und/oder-ausrichtung mindestens eines Stückgutes (2) aus der mittels der wenigstens einen Transporteinrichtung (3) seinem Erfassungsbereich (4) zugeführten Stückgüter (2) ausgebildet ist;
**gekennzeichnet dadurch, dass**
die Stückgüter (2) in zwei direkt benachbarten Reihen (1a, 1b) auf zwei der Transporteinrichtungen (3a, 3b) derart nah beieinander transportiert werden, dass sich die Stückgüter (2) der direkt benachbarten Reihen (1a, 1b) im Wesentlichen kontaktieren und
- wobei die dritte Reihe (1c) auf der dritten Transporteinrichtung (3c) seitlich beabstandet zu den Reihen (3a, 3b) der Stückgüter (2) der ersten beiden Transporteinrichtungen (3a, 3b) angeordnet ist.

2. Vorrichtung (10) nach Anspruch 1, bei welcher der mindestens eine Manipulator (5) zum klemmenden und/oder kraft- und/oder formschlüssigen Entgegennehmen sowie zum Abtrennen und Überführen in eine Zielposition (P1, P2) und/oder -ausrichtung mindestens eines zuvorderst positionierten Stückgutes (2) von mindestens zwei benachbarten parallelen Reihen (1) ausgebildet ist.

3. Vorrichtung (10) nach Anspruch 1 oder 2, bei welcher der Manipulator (5) wenigstens zwei gegeneinander zustellbare Klemm- und/oder Greifelemente (52) umfasst, wobei die Klemm- und/oder Greifelemente (52) des Manipulators (5) in einer ersten Arbeitsposition zum klemmenden und/oder kraft- und/oder formschlüssigen Entgegennehmen von mindestens einem Stückgut aus mindestens einer der mindestens zwei parallelen Reihen (1), insbesondere zum klemmenden und/oder kraft- und/oder formschlüssigen Entgegennehmen von mindestens einem Stückgut (2) aus jeder der mindestens zwei parallelen Reihen (1), parallel zur Transportrichtung (TR) angeordnet werden können bzw. anordenbar sind.

4. Vorrichtung (10) nach Anspruch 1 oder 2, bei welcher die Vorrichtung (10) mindestens ein Gruppierband (18) umfasst, wobei das mindestens eine Gruppierband (18) zur Ausbildung von definierten Lücken (L) zwischen den in mindestens zwei parallelen Reihen (1) zugeführten Stückgütern (2) und den nachfolgenden Stückgütern (2) und/oder zur Ausbildung von definierten Lücken (L) zwischen Gruppen (7), umfassend mindestens zwei Stückgüter (2), und den nachfolgenden Stückgütern (2), ausgebildet ist.

5. Vorrichtung (10) nach Anspruch 4, bei der die Klemm- und/oder Greifelemente (52) des Manipulators (5) in einer zweiten Arbeitsposition zum klemmenden und/oder kraft- und/oder formschlüssigen Entgegennehmen von mindestens einem Stückgut (2) aus mindestens einer der mindestens zwei parallelen Reihen (1), insbesondere zum klemmenden und/oder kraft- und/oder formschlüssigen Entgegennehmen von mindestens einem Stückgut (2) aus jeder der mindestens zwei parallelen Reihen (1), senkrecht zur Transportrichtung (TR) angeordnet werden können bzw. anordnenbar sind.

6. Vorrichtung (10) nach Anspruch 5, bei der eines der Klemm- und/oder Greifelemente (52) des Manipulators (5) in Transportrichtung (TR) hinter dem mindestens einen abzutrennenden Stückgut (2) oder der abzutrennenden Gruppe (7) von Stückgütern (2), insbesondere innerhalb einer Lücke (L) zwischen dem mindestens einen abzutrennenden Stückgut (2) oder der abzutrennenden Gruppe (7) und den nachfolgenden Stückgütern (2) angeordnet ist, und wobei das andere Klemm- und/oder Greifelement (52) in Transportrichtung (TR) vor dem mindestens einen abzutrennenden Stückgut (2) oder der abzutrennenden Gruppe (7) angeordnet ist.

7. Förder-, Verarbeitungs- und/oder Verpackungsanlage für Stückgüter (2) mit einer Vorrichtung (10) zum Umgang mit in mindestens zwei parallelen Reihen (1) bewegten Stückgütern (2), wobei die Vorrichtung (10) gemäß einem der Ansprüche 1 bis 6 ausgebildet ist.

8. Verfahren zum Umgang mit in mindestens zwei parallelen Reihen (1) bewegten Stückgütern (2) zur Ausbildung einer eine Mehrzahl an Stückgütern (2) umfassenden palettierfähigen Lage oder Teillage innerhalb einer Vorrichtung gemäß einem der Ansprüche 1 bis 6, bei dem in mindestens einem Verfahrensschritt
- wenigstens zwei in parallelen Reihen (1) nebeneinander transportierte Stückguter (2) klemmend und/oder kraft- und/oder formschlüssig erfasst, von den mindestens zwei parallelen Reihen (1) räumlich abgetrennt und in eine definierte relative Zielposition (P1, P2) und/oder-ausrichtung gegenüber nachfolgenden Stückgütern (2) gebracht werden

9. Verfahren nach Anspruch 8, bei dem die Stückgüter (2) in den mindestens zwei parallelen Reihen (1) zumindest weitgehend ohne Abstand zueinander angeordnet sind.

10. Verfahren nach Anspruch 8 oder 9, bei dem die Stückgüter (2) in jeder der mindestens zwei parallelen Reihen (1) in Transportrichtung (TR) ohne Abstände zueinander oder mit minimalen Abständen zueinander als geschlossene Formation zugeführt werden.

11. Verfahren nach Anspruch 8 oder 9, bei dem innerhalb mindestens einer der mindestens zwei parallelen Reihen (1) einzelne Stückgüter (2) und/oder Gruppen (7) von Stückgütern (2) gebildet werden, die voneinander in einer Transportrichtung (TR) durch definierte Lücken (L) voneinander beabstandet sind, insbesondere wobei wahlweise gleiche oder unterschiedliche große Lücken (L) zwischen aufeinander folgenden Stückgütern (2) und/oder Gruppen (7) von Stückgütern (2) erzeugt werden.

12. Verfahren nach Anspruch 11, bei dem innerhalb der mindestens zwei parallelen Reihen (1) korrespondierende einzelne Stückgüter (2) und/oder Gruppen (7) von Stückgütern (2) gebildet werden.

13. Verfahren nach Anspruch 12, bei dem von mindestens zwei direkt benachbarten parallelen Reihen (1) durch Lücke (L) zu nachfolgenden Stückgütern (2) abgetrennte korrespondierende einzelne Stückgüter (2) und/oder Gruppen (7) von Stückgütern (2) gemeinsam erfasst, räumlich abgetrennt und in eine definierte relative Zielposition (P1, P2) und/oder -ausrichtung gegenüber nachfolgenden Stückgütern (2) gebracht werden.

14. Verfahren nach einem der Ansprüche 8 bis 13, bei dem die erfassten Stückgüter (2) beim Verbringen in die definierte relative Zielposition (P1, P2) und/oderausrichtung gedreht werden, oder wobei die erfassten Stückgüter (2) gegenüber den nachfolgenden Stückgütern (2) in Transportrichtung (TR) fluchtend verschoben werden, oder wobei die erfassten Stückgüter (2) gegenüber den nachfolgenden Stückgütern (2) mit einem seitlichen Versatz verschoben werden.

## Claims

1. A device (10) for handling piece goods (2) moved in at least two parallel rows (1), comprising
- at least one manipulator (5) for piece goods (2) and
- wherein the device (10) comprises three parallel transport devices (3), by way of which directly successive piece goods (2) arranged in at least three parallel rows (1) are transportable without interruption and/or at a continuous transport speed (v3) in a transport direction (TR) into a seizing range (4) of the at least one manipulator (5),
- wherein the at least one manipulator (5) is designed for receiving at least one piece good (2) in a clamping and/or force-locking and/or form-locking manner, as well as for separating and transferring the at least one piece good (2) to a target position (P1, P2) and/or target alignment, the piece goods (2) being transported into the seizing range (4) of the manipulator by means of the at least one transport device (3);
**characterized in that**
- piece goods (2) in two directly adjacent rows (1a, 1b) are transported on two of the transport devices (3a, 3b) so close together, that the piece goods (2) of the directly adjacent rows (1a, 1b) essentially contact each other and
- wherein the third row (1c) on the third transport device (3c) is arranged laterally spaced apart from the rows (3a, 3b) of piece goods (2) on the first two transport devices (3a, 3b).

2. The device (10) according to claim 1, in which the at least one manipulator (5) is designed for receiving at least one foremost piece good (2) from at least two adjacent rows (1), in a clamping and/or force-locking and/or form-locking manner, as well as for separating and transferring said piece goods (2) to a target position (P1, P2) and/or target alignment.

3. The device (10) according to claim 1 or 2, in which the manipulator (5) comprises at least two clamping elements and/or gripping elements (52) which can be adjusted relative to one another, wherein in a first working position the clamping elements and/or gripping elements (52) of the manipulator (5) designed for clampingly and/or force-lockingly and/or form-lockingly receiving at least one piece good (2) from at least one of the at least two parallel rows (1) are arranged or can be arranged parallel to the transport direction (TR), in particular for clampingly and/or force-lockingly and/or form-lockingly receiving at least one piece good (2) from each of the at least two parallel rows (1).

4. The device (10) according to claim 1 or 2, in which the device (10) comprises at least one grouping belt (18), the at least one grouping belt (18) being designed for forming defined gaps (L) between the piece goods (2) supplied in at least two parallel rows (1) and the subsequent piece goods (2) and/or for forming defined gaps (L) between groups (7) comprising at least two piece goods (2) each and the subsequent piece goods (2).

5. The device (10) according to claim 4, wherein in a second working position the clamping elements and/or gripping elements (52) of the manipulator (5) designed for clampingly and/or force-lockingly and/or form-lockingly receiving at least one piece good from at least one of the at least two parallel rows (1) are arranged or can be arranged perpendicular to the transport direction (TR), in particular for clampingly and/or force-lockingly and/or form-lockingly receiving of at least one piece good (2) from each of the at least two parallel rows (1).

6. The device (10) according to claim 5, in which one of the clamping elements and/or gripping elements (52) of the manipulator (5) is positioned in the transport direction (TR) behind the at least one piece good (2) to be separated or the group (7) of piece goods (2) to be separated, in particular within a gap (L) between the at least one piece good (2) to be separated or the group (7) to be separated and the subsequent piece goods (2), and wherein the other clamping element and/or gripping element (52) is arranged in the transport direction (TR) in front of the at least one piece good (2) to be separated or the group (7) to be separated.

7. A conveying, processing and/or packaging facility for piece goods (2) with a device (10) for handling piece goods (2) moved in at least two parallel rows (1), the device (10) being designed as recited in one of the claims 1 to 6.

8. A method for handling piece goods (2) moved in at least two parallel rows (1) for forming a palletizable layer or partial layer, the layer or partial layer comprising a plurality of piece goods (2) within a device (10) according to one of the claims 1 to 6, wherein in at least one method step
- at least two piece goods (2) transported beside each other in parallel rows (1) are seized in a clamping and/or force-locking and/or form-locking manner, are spatially separated from the at least two parallel rows (1) and are brought into a defined relative target position (P1, P2) and/or target alignment in relation to subsequent piece goods (2).

9. The method according to claim 8, in which the piece goods (2) are arranged in the at least two parallel rows (1) at least largely without a distance between one another.

10. The method according to claim 8 or 9, in which the piece goods (2) are fed in each of the at least two parallel rows (1) in the transport direction (TR) without a distance between one another or with minimal distance between one another as a closed formation.

11. The method according to claim 8 or 9, in which individual piece goods (2) and/or groups (7) of piece goods (2) are formed within at least one of the at least two parallel rows (1), which are spaced from one another in a transport direction (TR) by defined gaps (L), in particular wherein optionally identical or different large gaps (L) are produced between successive piece goods (2) and/or groups (7) of piece goods (2).

12. The method according to claim 11 whereby within the at least two parallel rows (1) corresponding individual piece goods (2) and/or groups (7) of piece goods (2) are formed.

13. The method according to claim 12, in which corresponding individual piece goods (2) and/or groups (7) of piece goods (2) separated from at least two directly adjacent parallel rows (1) by gaps (L) to subsequent piece goods (2) are jointly seized, spatially separated and brought into a defined relative target position (P1, P2) and/or target alignment with respect to subsequent piece goods (2).

14. The method according to one of the claims 8 to 13, in which the seized piece goods (2) are rotated during transfer into the defined relative target position (P1, P2) and/or target alignment, or in which the seized piece goods (2) are displaced in alignment relative to the subsequent piece goods (2) in the transport direction (TR), or in which the seized piece goods (2) are displaced with a lateral offset with respect to subsequent piece goods (2).

## Revendications

1. Dispositif (10) de manipulation de produits de détail (2) déplacés en au moins deux rangées (1) parallèles, comprenant
- au moins un manipulateur (5) pour les produits de détail (2), et
- dans lequel le dispositif (10) comprend trois dispositifs de transport (3) parallèles par l'intermédiaire desquels des produits de détail (2) immédiatement successifs et disposés en trois rangées (1) parallèles peuvent être transportés sans interruption et/ou à une vitesse de transport (v3) continue dans une direction de transport (TR) dans une zone de saisie (4) dudit au moins un manipulateur (5),
- dans lequel ledit au moins un manipulateur (5) est conçu pour recevoir par serrage et/ou par adhérence et/ou à engagement positif ainsi que pour séparer et transférer dans une position cible (P1, P2) et/ou orientation cible au moins un produit de détail (2) parmi les produits de détail (2) amenés à sa zone de saisie (4) au moyen dudit au moins un dispositif de transport (3);
**caractérisé par le fait que**
- les produits de détail (2) sont transportées en deux rangées (1a, 1b) directement adjacentes, sur deux des dispositifs de transport (3a, 3b), d'une manière tellement proche les uns des autres que les produits de détail (2) des rangées (1a, 1b) directement adjacentes sont pour l'essentiel en contact entre eux, et
- dans lequel la troisième rangée (1c) sur le troisième dispositif de transport (3c) est disposée à une distance latérale des rangées (3a, 3b) des produits de détail (2) des deux premiers dispositifs de transport (3a, 3b).

2. Dispositif (10) selon la revendication 1, dans lequel ledit au moins un manipulateur (5) est conçu pour recevoir par serrage et/ou par adhérence et/ou à engagement positif ainsi que pour séparer et transférer dans une position cible (P1, P2) et/ou orientation cible au moins un produit de détail (2) positionné en premier d'au moins deux rangées (1) parallèles adjacentes.

3. Dispositif (10) selon la revendication 1 ou 2, dans lequel le manipulateur (5) comprend au moins deux éléments de serrage et/ou de préhension (52) qui peuvent être avancés l'un vers l'autre, dans lequel, dans une première position de travail pour recevoir par serrage et/ou par adhérence et/ou à engagement positif au moins un produit de détail d'au moins une desdites au moins deux rangées (1) parallèles, en particulier pour recevoir par serrage et/ou par adhérence et/ou à engagement positif au moins un produit de détail (2) de chacune desdites au moins deux rangées (1) parallèles, les éléments de serrage et/ou de préhension (52) du manipulateur (5) peuvent être agencés ou bien sont agençables parallèlement à la direction de transport (TR).

4. Dispositif (10) selon la revendication 1 ou 2, dans lequel le dispositif (10) comprend au moins une bande de groupement (18), dans lequel ladite au moins une bande de groupement (18) est conçue pour former des lacunes (L) définies entre les produits de détail (2) amenés en au moins deux rangées parallèles (1) et les produits de détail (2) suivants et/ou pour former des lacunes (L) définies entre des groupes (7) comprenant au moins deux produits de détail (2) et les produits de détail (2) suivants.

5. Dispositif (10) selon la revendication 4, dans lequel, dans une deuxième position de travail pour recevoir par serrage et/ou par adhérence et/ou à engagement positif au moins un produit de détail (2) d'au moins une desdites au moins deux rangées (1) parallèles, en particulier pour recevoir par serrage et/ou par adhérence et/ou à engagement positif au moins un produit de détail (2) de chacune desdites au moins deux rangées (1) parallèles, les éléments de serrage et/ou de préhension (52) du manipulateur (5) peuvent être agencés ou bien sont agençables perpendiculairement à la direction de transport (TR).

6. Dispositif (10) selon la revendication 5, dans lequel l'un des éléments de serrage et/ou de préhension (52) du manipulateur (5) est disposé, dans la direction de transport (TR), en aval dudit au moins un produit de détail (2) à séparer ou du groupe (7) à séparer comprenant des produits de détail (2), en particulier dans une lacune (L) entre ledit au moins un produit de détail (2) à séparer ou le groupe (7) à séparer et les produits de détail (2) suivants, et dans lequel l'autre élément de serrage et/ou de préhension (52) est disposé, dans la direction de transport (TR), en amont dudit au moins un produit de détail (2) à séparer ou du groupe (7) à séparer.

7. Installation de transport, de traitement et/ou d'emballage pour des produits de détail (2), comprenant un dispositif (10) de manipulation de produits de détail (2) déplacés en au moins deux rangées (2) parallèles, dans lequel le dispositif (10) est réalisé selon l'une quelconque des revendications 1 à 6.

8. Procédé de manipulation de produits de détail (2) déplacés en au moins deux rangées (1) parallèles, pour former une couche ou couche partielle palettisable comprenant une pluralité de produits de détail (2), à l'intérieur d'un dispositif selon l'une quelconque des revendications 1 à 6, dans lequel, dans au moins une étape de procédé,
- au moins deux produits de détail (2) transportés les uns à côté des autres en rangées (1) parallèles sont saisis par serrage et/ou par adhérence et/ou à engagement positif, sont séparés spatialement desdites au moins deux rangées (1) parallèles et sont amenés dans une position cible (P1, P2) et/ou orientation cible relative(s) définie(s) par rapport à des produits de détail (2) suivants.

9. Procédé selon la revendication 8, dans lequel les produits de détail (2) dans lesdites au moins deux rangées (1) parallèles sont disposées, au moins dans une large mesure, sans espacement les uns des autres.

10. Procédé selon la revendication 8 ou 9, dans lequel les produits de détail (2) dans chacune desdites au moins deux rangées (1) parallèles sont amenés dans la direction de transport (TR), en tant que formation fermée, sans espacements les uns par rapport aux autres ou avec des espacements minimaux les uns par rapport aux autres.

11. Procédé selon la revendication 8 ou 9, dans lequel des produits de détail (2) individuels et/ou des groupes (7) de produits de détail (2) sont formés à l'intérieur d'au moins une desdites au moins deux rangées (1) parallèles et sont espacés les uns des autres par des lacunes (L) définies dans une direction de transport (TR), en particulier des lacunes (L) au choix soit identiques soit différentes étant produites entre des produits de détail (2) et/ou groupes (7) de produits de détail (2), qui se suivent.

12. Procédé selon la revendication 11, dans lequel des produits de détail (2) individuels et/ou groupes (7) de produits de détail (2) correspondants sont formés à l'intérieur desdites au moins deux rangées (1) parallèles.

13. Procédé selon la revendication 12, dans lequel des produits de détail (2) individuels et/ou groupes (7) de produits de détail (2) correspondants séparés d'au moins deux rangées (1) parallèles directement adjacentes par une lacune (L) par rapport à des produits de détail (2) suivants sont tous ensemble saisis, séparés spatialement et amenés dans une position cible (P1, P2) et/ou orientation cible relative(s) définie(s) par rapport à des produits de détail (2) suivants.

14. Procédé selon l'une quelconque des revendications 8 à 13, dans lequel les produits de détail (2) saisis sont tournés lorsqu'ils sont amenés dans la position cible (P1, P2) et/ou l'orientation cible relative(s) définie(s), ou dans lequel les produits de détail (2) saisis sont déplacés en alignement par rapport aux produits de détail (2) suivants dans la direction de transport (TR), ou dans lequel les produits de détail (2) saisis sont déplacés avec un décalage latéral par rapport aux produits de détail (2) suivants.
